# FASCICULE DE BREVET EUROPEEN

(11) **EP 1 164 756 B1**
(45) Date de publication et mention de la délivrance du brevet: **27.02.2013**
(21) Numéro de dépôt: 01401525.9
(22) Date de dépôt: 12.06.2001
(51) Int. Cl.: G05B 19/042

(54) **Système d'accès à un équipement d'automatisme via un réseau de proximité sans fil**
System für den Zugriff auf eine Automatikeinrichtung über ein drahtloses Netz kurzer Entfernung
System of access to automation equipment via a proximity wireless network

(30) Priorité: 16.06.2000 FR 0007760
(43) Date de publication de la demande: 19.12.2001
(73) Titulaire: Schneider Automation, 06560 Valbonne (FR)
(72) Inventeur: Vincent, Christophe, 06550 La Roquette-sur-Siagne (FR); Hardy, Christian, 83340 Le Thoronet (FR); Stawikowski, Jean-Marie, 06600 Antibes (FR); Rousseau, Robert, 06600 Antibes (FR)
(74) Mandataire: Dufresne, Thierry

(56) Documents cités:
- WO-A-01/20844
- WO-A-01/41398
- WO-A-01/42894
- DE-A- 10 046 300
- HAARTSEN J: "DIE BLUETOOTH-UEBERTRAGUNG" FUNKSCHAU,FRANZIS-VERLAG K.G. MUNCHEN,DE, vol. 72, no. 15, 9 juillet 1999 (1999-07-09), pages 76-80, XP000913229 ISSN: 0016-2841

## Description

La présente invention concerne un système d'accès à un équipement d'automatisme via un réseau de proximité sans fil, utilisant par exemple le protocole Bluetooth, à partir d'au moins un appareil mobile ou à partir d'un autre équipement d'automatisme. Ce système peut s'appliquer à toute application appartenant au domaine des automatismes industriels, des automatismes du bâtiment ou du contrôle/commande des réseaux électriques de distribution.

Une connexion locale entre un équipement d'automatisme et un appareil mobile permet, notamment à des opérateurs de maintenance ou d'exploitation munis d'un tel appareil mobile, d'accéder ponctuellement, au moyen d'une interface homme/machine intégrée dans l'appareil mobile, à des fonctions de commande, de visualisation et de contrôle, lorsque ces opérateurs sont situés à proximité de l'équipement d'automatisme à contrôler, c'est-à-dire à une distance typiquement de l'ordre de quelques mètres. Sous le terme "équipement d'automatisme", on regroupe ci-après un automate programmable, un module d'entrées/sorties, un dispositif de régulation, une station de contrôle/commande, un terminal de dialogue homme-machine, un capteur/actionneur intelligent ou tout autre équipement lié à une application d'automatisme. Sous le terme "appareil mobile", on désigne ci-après un téléphone portable, un ordinateur portable, un PDA (Personal Digital Assistant), mais aussi tout périphérique d'équipement d'automatisme susceptible d'être déplaçable comme par exemple une imprimante.

Une telle connexion locale nécessite habituellement un branchement électrique par câble à un point de connexion soit en point à point soit par un réseau local. Cependant un branchement filaire fiable n'est pas toujours facile à réaliser lorsque l'équipement d'automatisme est difficile d'accès pour l'opérateur, soit en raison d'un emplacement géographique inaccessible, soit pour des raisons de sécurité d'accès (étanchéité, ambiance nocive). De plus, des branchements et débranchements répétés des appareils mobiles peuvent à la longue endommager les points de connexion.

Un autre besoin consiste à vouloir réaliser une connexion locale entre plusieurs équipements d'automatisme, par exemple dans le cas où un ou plusieurs des équipement(s) d'automatisme serait(ent) embarqué(s) sur un support mobile, tel qu'un chariot, un pont roulant ou autres. On souhaite, en fonction de la localisation du support mobile, faire communiquer ponctuellement cet équipement d'automatisme mobile avec un autre équipement d'automatisme situé à proximité par exemple pour des fonctions de commande et de contrôle (envoi d'ordres et de consignes, réception de comptes-rendus, etc...).

Il existe déjà des connexions sans fil réalisables au moyen d'une technologie infrarouge. Cependant, ces connexions sont directionnelles et peuvent être interrompues dès qu'un obstacle se trouve entre l'émetteur et le récepteur, ce qui les rend moins intéressantes dans certaines applications d'automatisme. Une connexion de proximité rapide, fiable et simple à mettre en oeuvre serait donc considérée comme un progrès important particulièrement pour les opérations de maintenance et d'exploitation sur des équipements d'automatisme. C'est pourquoi, une technologie par ondes radio permettrait une meilleure fiabilité des connexions.

Par ailleurs, dans le but de pouvoir faire communiquer des équipements d'automatisme et des appareils mobiles d'origines très diverses, il serait souhaitable de disposer d'une technologie standard permettant à un grand nombre d'appareils différents de se détecter et de s'identifier de façon automatique pour un utilisateur. Le protocole Bluetooth est une technologie de réseau de proximité sans fil d'un haut débit par ondes radio. Cette technologie, issue du monde des télécommunications et de l'informatique, émane du "Bluetooth SIG" (Special Interest Group) et permet une communication entre plusieurs appareils situés à une distance de l'ordre d'une dizaine de mètres l'un de l'autre (hors répéteur et en l'état actuel de la technologie). Elle ne nécessite pas de configuration puisque tout appareil rentrant dans le champ de portée d'un réseau de proximité est automatiquement détecté et synchronisé avec les autres appareils connectés à ce réseau de proximité de façon à pouvoir communiquer.

Cette technologie est décrite par exemple à Haartsen, J. "Die Bluetooth-Übenragung" Funkschau, juillet 1999.

Il serait donc intéressant d'utiliser cette technologie dans le domaine des automatismes pour apporter une solution aux problèmes précédemment posés, à savoir assurer une connexion rapide à partir d'un appareil mobile notamment dans le cadre d'opérations de maintenance et d'exploitation sur des équipements d'automatisme ou assurer une connexion rapide entre plusieurs équipements d'automatisme pour des fonctions de commande et de contrôle.

Ainsi, grâce à l'invention, un opérateur de maintenance et d'exploitation, gérant par exemple plusieurs équipements d'automatisme autonomes situés à des endroits différents, pourra accéder rapidement à chaque équipement d'automatisme à partir d'un appareil mobile sans besoin de connexion électrique et sans procédure particulière, lui facilitant donc le travail.

De même, des équipements d'automatisme, notamment des équipements d'automatisme embarqués dans des installations susceptibles de se déplacer, pourront aisément communiquer entre eux (ponctuellement ou non en fonction de leur localisation relative), grâce à l'utilisation d'un système d'accès selon l'invention, leur permettant de se détecter et de s'identifier de façon transparente vis-à-vis des programmes application d'automatisme, de façon à pouvoir ensuite s'échanger des messages et des informations.

C'est pourquoi l'invention décrit un système d'accès entre un automate programmable serveur, lequel intègre des moyens d'émission/réception pour émettre et recevoir des messages sur un réseau de proximité sans fil utilisant une technologie par ondes radio et au moins un appareil mobile ou au moins un automate programmable client. Ce système d'accès se caractérise par le fait que l'automate programmable serveur comporte des moyens de communication serveur capables de mettre en oeuvre un mécanisme de liaison conforme au protocole Bluetooth avec des moyens de communication d'un appareil mobile ou avec des moyens de communication client d'un automate programmable client, dans le but de fournir des fonctions de commande, de visualisation et de contrôle de l'automate programmable serveur, lequel mécanisme de liaison comporte une phase de détection, une phase de description et une phase de services.

Les moyens de communication client ou les moyens de communication serveur d'un automate programmable ont accès à une mémoire interne contenant des informations relatives à l'équipement d'automatisme. Selon une caractéristique de l'invention, un même automate programmable peut comporter à la fois des moyens de communication serveur et des moyens de communication client.

L'invention concerne également un automate programmable caractérisé par le fait qu'il communique sur un réseau de proximité au moyen d'un système d'accès selon l'une des revendications précédentes.

D'autres caractéristiques vont apparaître dans la description détaillée qui suit en se référant à un mode de réalisation donné à titre d'exemple et représenté par les dessins annexés sur lesquels :
- la figure 1 représente un exemple d'architecture du système d'accès décrit dans l'invention entre un appareil mobile et un équipement d'automatisme serveur,
- la figure 2 représente un autre exemple d'architecture du système d'accès décrit dans l'invention entre un équipement d'automatisme client et un équipement d'automatisme serveur,
- la figure 3 schématise différents types de messages possibles,
- la figure 4 représente un équipement d'automatisme qui est à la fois client et serveur.

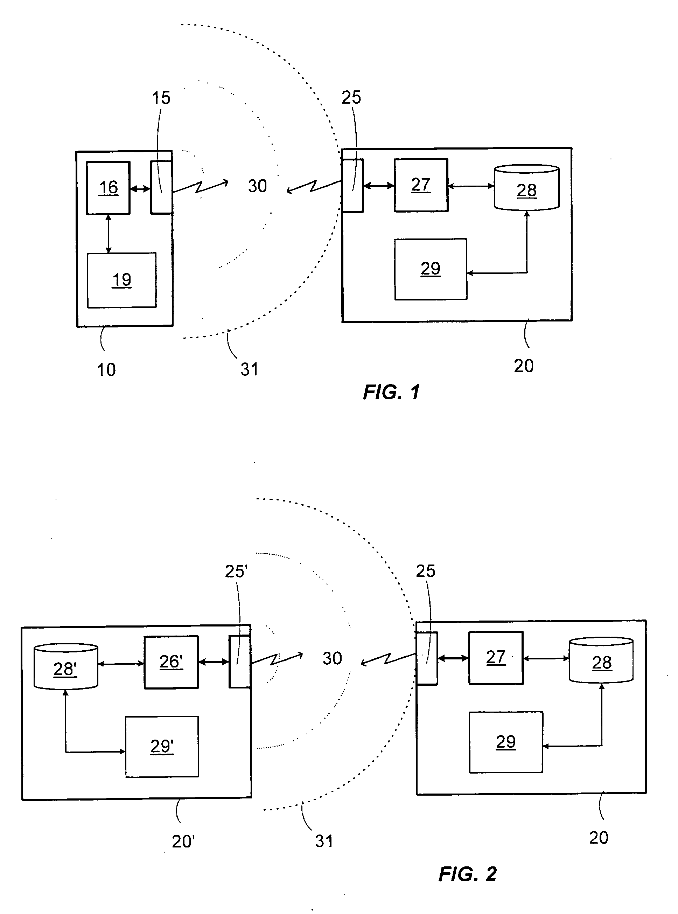

Dans la figure 1, un équipement d'automatisme serveur 20 comporte des moyens d'émission/réception 25, connectés à des moyens de communication serveur 27, pouvant eux-mêmes accéder à une mémoire interne 28 de données de l'équipement d'automatisme serveur 20. Cette mémoire interne 28 qui contient notamment des informations relatives à l'état de l'équipement d'automatisme serveur 20 ainsi que des variables représentatives d'une application d'automatisme pilotée par l'équipement d'automatisme. Elle est également accessible à un programme application d'automatisme 29 qui peut se dérouler dans l'équipement d'automatisme serveur 20 pour commander et contrôler une application d'automatisme. On peut ainsi échanger des informations entre le programme application 29 et les moyens de communication serveur 27. Les moyens d'émission/réception 25 sont chargés d'émettre et de recevoir des messages sur un réseau de proximité 30 sans fil, utilisant une technologie par ondes radio supportant le protocole Bluetooth. Les moyens d'émission/réception 25 intègrent donc les composants nécessaires au fonctionnement du protocole Bluetooth notamment un chipset Bluetooth.

Les moyens de communication serveur 27 sont capables de mettre en oeuvre un mécanisme de liaison avec des moyens de communication 16 d'au moins un appareil mobile 10. Cet appareil mobile 10 comporte des moyens d'émission/réception 15 pour émettre et recevoir des messages sur le réseau de proximité 30, connectés aux moyens de communication 16. L'appareil mobile 10 comporte aussi une interface homme-machine 19, qui inclut par exemple un clavier ou un écran, grâce à laquelle un utilisateur de l'appareil mobile 10 peut envoyer des requêtes et visualiser des réponses.

La figure 2 montre un équipement d'automatisme serveur 20 relié par un réseau de proximité 30 à un équipement d'automatisme client 20', comportant des moyens d'émission/réception 25' chargés d'émettre et de recevoir des messages sur un réseau de proximité 30 sans fil, utilisant une technologie par ondes radio supportant le protocole Bluetooth. Ces moyens d'émission/réception 25' sont connectés à des moyens de communication client 26', pouvant eux-mêmes accéder à une mémoire interne de données 28'. Cette mémoire interne 28' qui contient notamment des informations relatives à l'état de l'équipement d'automatisme serveur 20' ainsi que des variables représentatives d'une application pilotée par l'équipement d'automatisme. Elle est également accessible à un programme application 29' qui peut se dérouler dans l'équipement d'automatisme serveur 20' pour commander et contrôler une application d'automatisme. On peut ainsi échanger des informations entre le programme application 29' et les moyens de communication client 26'. Par ailleurs, les moyens de communication serveur 27 sont capables de mettre en oeuvre un mécanisme de liaison avec les moyens de communication client 26' d'au moins un équipement d'automatisme client 20'.

Un équipement d'automatisme possède une fonction serveur lorsqu'il est capable de recevoir et de répondre à une requête émise par un client (cet équipement peut alors s'appeler serveur). Inversement, un équipement d'automatisme possède une fonction client lorsqu'il est capable d'émettre une requête vers un serveur et de recevoir la réponse du serveur (cet équipement peut alors s'appeler client).

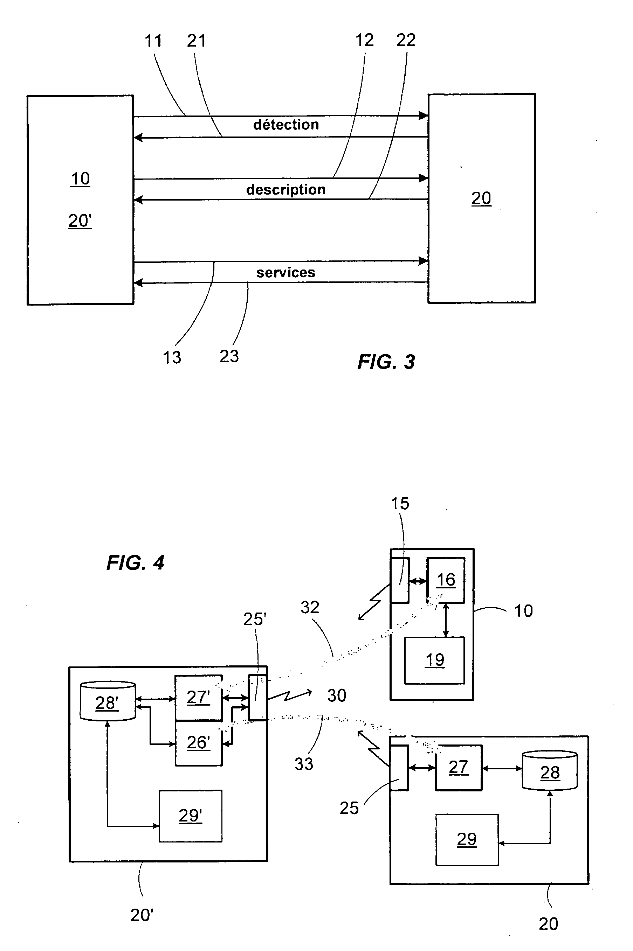

Pour établir un mécanisme de liaison, un client (c'est-à-dire un appareil mobile 10 ou un équipement d'automatisme client 20') entre d'abord en phase de détection pour essayer de détecter la présence d'au moins un serveur (c'est-à-dire un équipement d'automatisme serveur 20) dans le champ d'action 31 du réseau de proximité 30. Pour cela, en référence à la figure 3, les moyens de communication d'un client 16,26' génèrent une requête de détection 11. Dans le cas d'un équipement d'automatisme client 20', cette requête de détection 11 est générée par les moyens de communication 26' soit à intervalles réguliers, soit sur demande d'un opérateur, soit suite à un ordre émanant du programme application 29'.

Les moyens de communication serveur 27 restent en permanence à l'écoute d'une requête de détection 11. A la réception d'une telle requête, ils génèrent une réponse de détection 21 permettant de signaler à l'émetteur de la requête 11 la présence d'un équipement d'automatisme serveur 20 dans le champ d'action 31 du réseau de proximité 30.

A réception de cette réponse de détection 21, le client 10,20' poursuit l'établissement du mécanisme de liaison en entrant en phase de description dans laquelle les moyens de communication d'un client 16,26' génèrent une requête de description 12 à l'attention de l'équipement d'automatisme serveur 20 qui a répondu à la requête de détection 11. Quand celui-ci reçoit cette requête de description 12, il renvoie une réponse de description 22 qui peut inclure une identification et une authentification de l'équipement d'automatisme serveur 20, ainsi qu'une liste des services proposés qui seront accessibles au(x) client(s).

Suivant le type d'équipement d'automatisme serveur 20, les services proposés à l'utilisateur d'un appareil mobile 10 ou au programme application 29' d'un équipement d'automatisme client 20' comprennent notamment le chargement et le déchargement de programmes application, la lecture et l'écriture de variables internes et d'entrées/sorties, la surveillance d'états et de défauts, le pilotage de tout ou partie de l'équipement d'automatisme, etc... fournissant ainsi des fonctions de commande, de visualisation et de contrôle de l'équipement d'automatisme serveur 20. Tous ces services peuvent évidemment comporter un accès sécurisé par mots de passe, clés d'identification, ou autres moyens appropriés.

Lorsque la réponse de détection 22 émanant de l'équipement d'automatisme serveur 20 est reçue par le client 10,20', le mécanisme de liaison est établi et on entre dans la phase de services. A la demande d'un utilisateur d'un appareil mobile 10 et en fonction des services proposés, les moyens de communications 16 peuvent alors générer des requêtes de services 13 vers l'équipement d'automatisme serveur 20 et attendre les réponses de services 23 correspondantes. De même, à la demande du programme application 29' d'un équipement d'automatisme client 20' et en fonction des services proposés, les moyens de communications client 26' peuvent aussi générer des requêtes de services 13 vers l'équipement d'automatisme serveur 20 et attendre les réponses de services 23 correspondantes.

Un équipement d'automatisme tel que décrit dans l'invention peut simultanément posséder une fonction serveur et une fonction client. Pour cela, il doit comporter des moyens de communication serveur 27' et des moyens de communication client 26', pouvant accéder à la mémoire interne 28', comme le montre la figure 4. Dans cet exemple, un équipement d'automatisme 20' exerce une fonction serveur 32 par rapport à un appareil mobile 10, tout en exerçant également une fonction client 33 par rapport à un autre équipement d'automatisme serveur 20.

D'autres exemples d'utilisation de la présente invention sont envisageables. Par exemple, il est fréquent qu'un équipement d'automatisme possède sur sa face avant des moyens de signalisation tels que des LEDs ou des afficheurs numériques. Cependant, lorsque des équipements d'automatisme ne peuvent pas être installés dans le champ visuel d'un opérateur situé à proximité, leurs moyens de signalisation perdent leur utilité. De plus, installer des moyens de visualisation sur tous les équipements d'automatisme est une solution coûteuse, car ils ne servent qu'en présence d'un opérateur. Grâce à la présente invention, on peut donc concevoir un dispositif de visualisation portable faisant office d'appareil mobile client et permettant à un opérateur muni d'un tel dispositif, de remplacer les moyens de signalisation lorsqu'il se trouve à proximité d'un équipement d'automatisme serveur.

Plus généralement, l'invention peut aussi servir à centraliser divers périphériques, comme un clavier, une imprimante ou autres, dans le cadre d'une utilisation ponctuelle et partagée entre plusieurs équipements d'automatisme serveurs distants. Quand un opérateur souhaite utiliser un tel périphérique en liaison avec un équipement d'automatisme serveur donné, il n'a qu'à placer ce périphérique à proximité de l'équipement d'automatisme serveur durant le temps d'utilisation souhaité, ce qui évite les connexions électriques et permet d'optimiser ainsi le nombre de périphériques.

Il est bien entendu que l'on peut, sans sortir du cadre de l'invention, imaginer d'autres variantes et perfectionnements de détail et de même envisager l'emploi de moyens équivalents.

## Revendications

1. Système d'accès entre d'une part un automate programmable serveur (20), lequel intègre des moyens d'émission/réception (25) pour émettre et recevoir des messages (11,12,13,21,22,23) sur un réseau de proximité (30) sans fil utilisant une technologie par ondes radio, et d'autre part au moins un appareil mobile (10) ou au moins un automate programmable client (20'), **caractérisé par le fait que** l'automate programmable serveur (20) comporte des moyens de communication serveur (27) capables de mettre en oeuvre un mécanisme de liaison conforme au protocole Bluetooth avec des moyens de communication (16) d'un appareil mobile (10) ou avec des moyens de communication client (26') d'un automate programmable client (20'), dans le but de fournir des fonctions de commande, de visualisation et de contrôle de l'automate programmable serveur (20), ledit mécanisme de liaison comportant une phase de détection, une phase de description et une phase de services.

2. Système d'accès selon la revendication 1, **caractérisé par le fait que** les moyens de communication client (26') ou les moyens de communication serveur (27,27') d'un automate programmable (20) ont accès à une mémoire interne (28) contenant des informations relatives à l'automate programmable (20).

3. Système d'accès selon la revendication 2, **caractérisé par le fait qu'**un même automate programmable (20') peut comporter des moyens de communication serveur (27') et des moyens de communication client (26'), de façon à pouvoir assurer une fonction serveur et une fonction client.

4. Système d'accès selon la revendication 2 ou 3, **caractérisé par le fait que** les moyens de communication serveur (27) d'un automate programmable serveur (20) sont en attente d'une requête de détection (11) émise par au moins un appareil mobile (10) ou au moins un automate programmable client (20') sur le réseau de proximité (30).

5. Système d'accès selon la revendication 4, **caractérisé par le fait que**, suite à la réception d'une requête de détection (11) en provenance d'un appareil mobile (10) ou d'un automate programmable client (20'), les moyens de communication serveur (27) génèrent une réponse de détection (21) permettant de signaler leur présence à l'appareil mobile (10) ou à l'automate programmable client (20').

6. Système d'accès selon la revendication 2 ou 3, **caractérisé par le fait que** les moyens de communication client (26') d'un automate programmable client (20') émettent des requêtes de détection (11) sur le réseau de proximité (30), dans le but de détecter la présence d'au moins un automate programmable serveur (20) dans le champ d'action (31) du réseau de proximité (30).

7. Système d'accès selon la revendication 6, **caractérisé par le fait que** les requêtes de détection (11) sont émises par les moyens de communication client (26') à intervalles réguliers ou à l'initiative d'un programme application (29') se déroulant dans l'automate programmable client (20').

8. Système d'accès selon l'une des revendications 5 ou 6, **caractérisé par le fait que** les moyens de communication serveur (27) répondent à une requête de description (12) émise par un appareil mobile (10) ou par un automate programmable client (20') en renvoyant une réponse de description (22) pouvant inclure une identification et une authentification de l'automate programmable (20) ainsi qu'une liste des services proposés par l'automate programmable (20).

9. Système d'accès selon la revendication 8, **caractérisé par le fait que**, quand le mécanisme de liaison est établi, l'automate programmable serveur (20) peut échanger des messages (13,23) avec un appareil mobile (10) via le réseau de proximité (30), de façon à ce qu'un utilisateur de l'appareil mobile (10) puisse assurer des fonctions de commande, de visualisation et de contrôle de l'automate programmable serveur (20).

10. Système d'accès selon la revendication 8, **caractérisé par le fait que**, quand le mécanisme de liaison est établi, l'automate programmable serveur (20) peut échanger des messages (13,23) avec un automate programmable client (20') via le réseau de proximité (30), de façon à ce qu'un programme application (29') se déroulant dans l'automate programmable client (20') puisse assurer des fonctions de commande et de contrôle de l'automate programmable serveur (20).

11. Automate programmable **caractérisé par le fait qu'**il communique sur un réseau de proximité (30) au moyen d'un système d'accès selon l'une des revendications précédentes.

## Claims

1. Access system between a server programmable controller (20), which integrates transmission/reception means (25) to transmit and receive messages (11, 12, 13, 21, 22, 23) on a wireless proximity network (30) using a radio wave technology, and at least one mobile device (10) or at least one client programmable controller (20'), **characterised in that** the server programmable controller (20) comprises server communication means (27) capable of implementing a link mechanism in compliance with the Bluetooth protocol with communication means (16) of a mobile device (10) or with client communication means (26') of a client programmable controller (20'), in order to supply control, display and monitoring functions from the server programmable controller (20), the link mechanism comprising a detection phase, a description phase and a service phase.

2. Access system according to claim 1, **characterised in that** the client communication means (26') or the server communication means (27, 27') of a programmable controller (20) have access to an internal memory (28) containing information relating to the programmable controller (20).

3. Access system according to claim 2, **characterised in that** the same programmable controller (20') may comprise server communication means (27') and client communication means (26'), to be able to perform a server function and a client function.

4. Access system according to claim 2 or 3, **characterised in that** the server communication means (27) of a server programmable controller (20) are waiting for a detection query (11) sent by at least one mobile device (10) or at least one client programmable controller (20') on the proximity network (30).

5. Access system according to claim 4, **characterised in that**, following the reception of a detection query (11) from a mobile device (10) or a client programmable controller (20'), the server communication means (27) generate a detection response (21) used to signal their presence to the mobile device (10) or the client programmable controller (20').

6. Access system according to claim 2 or 3, **characterised in that** the client communication means (26') of a client programmable controller (20') transmit detection queries (11) on the proximity network (30), in order to detect the presence of at least one server programmable controller (20) in the field of action (31) of the proximity network (30).

7. Access system according to claim 6, **characterised in that** the detection queries (11) are transmitted by the client communication means (26') at regular intervals or at the initiative of an application program (29') running in the client programmable controller (20').

8. Access system according to any of claims 5 or 6, **characterised in that** the server communication means (27) respond to a description query (12) transmitted by a mobile device (10) or by a client programmable controller (20') by returning a description response (22) which can include an identification and authentication of the programmable controller (20) and a list of the services offered by the automatic control equipment (20).

9. Access system according to claim 8, **characterised in that**, when the link mechanism is set up, the server programmable controller (20) can exchange messages (13, 23) with a mobile device (10) via the proximity network (30), such that a user of the mobile device (10) can perform control, display and monitoring functions of the server programmable controller (20).

10. Access system according to claim 8, **characterised in that**, when the link mechanism is set up, the server programmable controller (20) can exchange messages (13, 23) with a client programmable controller (20') via the proximity network (30), such that an application program (29') running in the client programmable controller (20') can perform control, display and monitoring functions of the server programmable controller (20).

11. Programmable controller **characterised in that** it communicates on a proximity network (30) by means of an access system according to any of the above claims.

## Patentansprüche

1. Zugriffssystem zwischen einerseits einem programmierbaren Server-Automaten (20), in dem Sende-/Empfangseinrichtungen (25) zum Senden und Empfangen von Mitteilungen (11, 12, 13, 21, 22, 23) auf einem drahtlosen Nahbereich-Netzwerk (30) unter Verwendung einer Funkwellen-Technologie enthalten sind, und andererseits mindestens einem mobilen Gerät (10) oder mindestens einem programmierbaren Client-Automaten (20'), **dadurch gekennzeichnet, dass** der programmierbare Server-Automat (20) Server-Kommunikationseinrichtungen (27) aufweist, die einen Verbindungsmechanismus gemäß dem Bluetooth-Protokoll mit Kommunikationseinrichtungen (16) eines mobilen Geräts (10) oder mit Client-Kommunikationseinrichtungen (26') eines programmierbaren Client-Automaten (20') anwenden können, um Steuer-, Anzeige- und Kontrollfunktionen des programmierbaren Server-Automaten (20) zu liefern, wobei der Verbindungsmechanismus eine Erfassungsphase, eine Beschreibungsphase und eine Dienste-Phase aufweist.

2. Zugriffssystem nach Anspruch 1, **dadurch gekennzeichnet, dass** die Client-Kommunikationseinrichtungen (26') oder die Server-Kommunikationseinrichtungen (27, 27') eines programmierbaren Automaten (20) Zugriff auf einen internen Speicher (28) haben, der Informationen bezüglich des programmierbaren Automaten (20) enthält.

3. Zugriffssystem nach Anspruch 2, **dadurch gekennzeichnet, dass** der gleiche programmierbare Automat (20') Server-Kommunikationseinrichtungen (27') und Client-Kommunikationseinrichtungen (26') tragen kann, um eine Server-Funktion und eine Client-Funktion gewährleisten zu können.

4. Zugriffssystem nach Anspruch 2 oder 3, **dadurch gekennzeichnet, dass** die Server-Kommunikationseinrichtungen (27) eines programmierbaren Server-Automaten (20) auf eine Erfassungsanforderung (11) warten, die von mindestens einem mobilen Gerät (10) oder mindestens einem programmierbaren Client-Automaten (20') auf dem Nahbereich-Netzwerk (30) gesendet wird.

5. Zugriffssystem nach Anspruch 4, **dadurch gekennzeichnet, dass** nach dem Empfang einer von einem mobilen Gerät (10) oder einem programmierbaren Client-Automaten (20') kommenden Erfassungsanforderung (11) die Server-Kommunikationseinrichtungen (27) eine Erfassungsantwort (21) generieren, die es ermöglichen, ihr Vorhandensein dem mobilen Gerät (10) oder dem programmierbaren Client-Automaten (20') zu melden.

6. Zugriffssystem nach Anspruch 2 oder 3, **dadurch gekennzeichnet, dass** die Client-Kommunikationseinrichtungen (26') eines programmierbaren Client-Automaten (20') Erfassungsanforderungen (11) auf dem Nahbereich-Netzwerk (30) senden, um das Vorhandensein mindestens eines programmierbaren Server-Automaten (20) im Aktionsbereich (31) des Nahbereich-Netzwerks (30) zu erfassen.

7. Zugriffssystem nach Anspruch 6, **dadurch gekennzeichnet, dass** die Erfassungsanforderungen (11) von den Client-Kommunikationseinrichtungen (26') in gleichmäßigen Abständen oder auf die Initiative eines Anwendungsprogramms (29') gesendet werden, das in dem programmierbaren Client-Automaten (20') abläuft.

8. Zugriffssystem nach einem der Ansprüche 5 oder 6, **dadurch gekennzeichnet, dass** die Server-Kommunikationseinrichtungen (27) auf eine Beschreibungsanforderung (12) antworten, die von einem mobilen Gerät (10) oder von einem programmierbaren Client-Automaten (20') gesendet wird, indem sie eine Beschreibungsantwort (22) zurückschicken, die eine Kennung und eine Authentifizierung des programmierbaren Automaten (20) sowie eine Liste der vom programmierbaren Automaten (20) angebotenen Dienste enthalten kann.

9. Zugriffssystem nach Anspruch 8, **dadurch gekennzeichnet, dass**, wenn der Verbindungsmechanismus aufgebaut ist, der programmierbare Server-Automat (20) Mitteilungen (13, 23) mit einem mobilen Gerät (10) über das Nahbereich-Netzwerk (30) austauschen kann, damit ein Benutzer des mobilen Geräts (10) Steuer-, Anzeige- und Kontrollfunktionen des programmierbaren Server-Automaten (20) gewährleisten kann.

10. Zugriffssystem nach Anspruch 8, **dadurch gekennzeichnet, dass**, wenn der Verbindungsmechanismus aufgebaut ist, der programmierbare Server-Automat (20) Mitteilungen (13, 23) mit einem programmierbaren Client-Automaten (20') über das Nahbereich-Netzwerk (30) austauschen kann, damit ein Anwendungsprogramm (29'), das im programmierbaren Client-Automaten (20') abläuft, Steuer- und Kontrollfunktionen des programmierbaren Server-Automaten (20) gewährleisten kann.

11. Programmierbarer Automat, **dadurch gekennzeichnet, dass** er auf einem Nahbereich-Netzwerk (30) mittels eines Zugriffssystems nach einem der vorhergehenden Ansprüche kommuniziert.
